# EUROPÄISCHE PATENTSCHRIFT

(11) **EP 1 127 555 B1**
(45) Veröffentlichungstag und Bekanntmachung des Hinweises auf die Patenterteilung: **21.06.2006**
(21) Anmeldenummer: 01102076.5
(22) Anmeldetag: 30.01.2001
(51) Int. Cl.: A61C 13/20, F27B 17/02

(54) **Ofen mit Kalibriervorrichtung**
Furnace with calibration device
Four avec système de calibration

(30) Priorität: 24.02.2000 DE 10008603
(43) Veröffentlichungstag der Anmeldung: 29.08.2001
(73) Patentinhaber: Firma Ivoclar Vivadent AG, 9494 Schaan (LI)
(72) Erfinder: Rohner, Gottfried, 9450 Altstätten (CH); Lorünser, Johannes, 6700 Bludenz (AT); Ulbricht, Horst, 9492 Eschen/FL (CH)
(74) Vertreter: Baronetzky, Klaus

(56) Entgegenhaltungen:
- EP-A- 0 017 775
- EP-A- 1 008 839
- DE-A- 4 218 032
- US-A- 5 331 676

## Beschreibung

Die Erfindung betrifft einen Ofen, insbesondere für Dentalmaterial, gemäß dem Oberbegriff von Anspruch 1.

Für die Herstellung von Dentalkeramiken, aber auch für andere Zwecke im Dentalbereich, werden regelmäßig sogenannte Muffelöfen verwendet. Hierbei hat sich eine grundsätzlicher Aufbau als besonders praktikabel herausgestellt, bei welchem die eigentliche Heizeinrichtung in einer abhebbaren oder abschwenkbaren Ofenhaube integriert ist und eine Arbeitsfläche im wesentlichen plan ausgebildet ist, wobei durch entsprechende Markierungen ersichtlich ist, an welche Stelle eine Muffel (24) für das Brennen der Keramik zu plazieren ist. Diese Konstruktion erlaubt ein rasches Arbeiten und die erschütterungsarme Bewegung der Muffel (24) mit der Dentalkeramik.

Derartige Muffelöfen haben sich im Grunde bewährt und werden inzwischen seit deutlich mehr als einer Dekade eingesetzt. Jedoch müssen sie regelmäßig kalibriert werden, um eine gleichbleibende Qualität des erzeugten Brennguts zu gewährleisten. Hierzu wird regelmäßig bislang ein Kalibrierprogramm verwendet. Ein Probenträger mit einem sich seitlich erstreckenden Silberdraht wird hierzu auf die Brenngutfläche aufgebracht und das Kalibrierprogramm gestartet. Bei richtiger Kalibrierung soll sich am Ende des waagrechten Schmelzdrahts ein kleines, herunterhängendes Tröpfchen bilden. Bei Fehlkalibrierung schmilzt dementsprechend entweder der Kalibrierdraht oder verbleibt ungeschmolzen, so daß nach einer entsprechenden Anpassung eine erneute Überprüfung erforderlich ist. Obwohl der Schmelzpunkt von beispielsweise Gold mit 1064,76° C recht genau festlegbar ist, ist mit dieser Lösung eine Kalibrierung lediglich mit einer Genauigkeit von ein paar Grad möglich.

Ferner ist es bereits vorgeschlagen worden, einen Silberdraht um zwei Stifte zu wickeln, die auf einem Sockel aufgesteckt sind. Beim Schmelzen des Silberdrahts soll eine Unterbrechung der elektrischen Verbindung erfaßt werden. Diese Lösung ist jedoch aus verschiedenen Gründen nachteilig. Das Wickeln bietet keine sichere Möglichkeit der Kontaktgabe, denn der Anpreßdruck hängt stark von der individuell verschiedenen Wickel-Handkraft des Benutzers ab. Zudem besteht die Gefahr, daß die Kontaktstifte durch Oxidation keine zuverlässige Kontaktgabe mehr ermöglichen. Ferner neigt ein gewickelter Silberdraht bei Erwärmung zur Ausdehnung, und zwar bereits aufgrund des Wärmeausdehnungskoeffizienten von Silber. Gerade dies ist aber gefährlich, denn es kann dazu führen, daß ein bei Raumtemperatur bestehender Kontakt bei Erwärmung, beispielsweise auf 700°, unterbrochen wird. Eine eingesetzte Elektronik würde dann dies als Unterbrechung des Stromkreises erkennen, so daß eine beträchtliche Fehlkalibrierung erzeugt würde.

Ein weiterer Nachteil besteht darin, daß durch den schmelzenden Silberdraht der Sockel verschmutzt wird, so daß es hier zu Kriechströmen kommen kann.

Darüber hinaus muß das Kabel für die Kalibriervorrichtung nach außen geführt werden. Dies Kabel wird praktisch eingeklemmt, so daß es stark belastet wird. Andererseits ist es hierdurch praktisch nicht mehr möglich, bei Bedarf ein Vakuum anzulegen, denn durch den recht langen. Schlitz beidseitig des Kabels strömt Umgebungsluft in solchem Maße ein, daß auch bei einer starken Unterdruckpumpe eine nennenswerte Reduzierung des Innendrucks nicht möglich ist.

Es sind zahlreiche andere Möglichkeiten der Kalibrierung von Öfen außerhalb des Dentalbereichs bekannt geworden. So ist aus der US-PS 53 31 676 eine Kalibriervorrichtung bekannt, die mit voneinander beabstandeten Thermoelementen arbeitet.

Ferner ist aus der DE-OS 42 18 032 ein Ofen zur Thermoanalyse bekannt, bei dem ein Probenträger mit zwei Thermoelementen ausgestattet ist, deren Speisung durch das Unterteil des Ofenkörpers erfolgt. Der Probenträger steht allerdings frei auf der Oberseite des Unterteils des Ofenkörpers, so daß er im Grunde verrutschen kann. Dem sucht diese Lösung dadurch zu begegnen, daß der Ofeninnenraum recht breit und lang, aber flach konstruiert ist.

Dementsprechend bestehen die wesentlichen Nachteile der bekannten Lösungen darin, daß eine unsichere und/oder ungenaue Kalibrierung Risiken bei der Anwendung des Muffelofens erzeugt.

Daher liegt der Erfindung die Aufgabe zugrunde, einen Ofen insbesondere für Dentalmaterial gemäß dem Oberbegriff von Anspruch 1 zu schaffen, der in zuverlässiger, aber dennoch wirtschaftlicher Weise kalibrierbar ist.

Diese Aufgabe wird erfindungsgemäß durch Anspruch 1 gelöst. Vorteilhafte Weiterbildungen ergeben sich aus den Unteransprüchen.

Besonders günstig ist es erfindungsgemäß, daß in der Brenngutplatte eine Vorrichtung als Zentriereinheit vorgesehen ist, die im normalen Betrieb des Muffelofens von einer Füllscheibe abgedeckt ist und für das Kalibrieren freigelegt wird. Diese bevorzugt als Mulde oder Ausnehmung ausgebildete Vorrichtung legt exakt die Position der Kalibriervorrichtung fest, die mit ihren Außenabmessungen dementsprechend genau eingepaßt sein kann. Hierdurch wird bereits sichergestellt, daß nicht durch eine Fehlplazierung der Kalibriervorrichtung eine Fehljustierung erfolgt. Die Mulde erlaubt die verdeckte Anbringung von Kontaktierungen, was es wiederum ermöglicht, die Nachteile zu vermeiden, die durch die Durchführung eines Kabels unter der Ofenhaube entsteht. Hierzu gehört insbesondere die Abdichtung des Ofens auch im Kalibrierbetrieb dergestalt, daß auch ein Vakuumbetrieb während des Kalibrierens bei Bedarf wahlweise möglich ist. Dies andererseits eröffnet die Möglichkeit, auch mit hinsichtlich der Oxidation weniger kritischen Materialien für die elektrischen Leiter zu arbeiten. Es muß kein Gold- oder gar Platinhalter verwendet werden, um den Kalibrierdraht temperaturstabil und zunderfrei, und damit also kontaktsicher, zu halten. Dies ermöglicht es andererseits aber auch, für verbesserte Kalibrierungen einen Gold-Kalibrierdraht zu verwenden, der bei 1.064,76°C schmilzt und insofern eine exakte und verbesserte Referenz bietet.

Es ist auch möglich, durch sequentielle Verwendung von Gold- und Silber-Kalibrierdrähten zwei Kalibrierpunkte zu verwenden, um auch die etwaige Dejustierung des Ofens hinsichtlich des Temperaturverlaufs kompensieren und den Ofen auch insofern nachkalibrieren zu können.

Durch die Möglichkeit, die Oxidationsneigung durch Erzeugung eines Vakuums drastisch zu reduzieren, besteht andererseits die Möglichkeit, eine auch häufiger wiederverwendbare Kalibriervorrichtung zu realisieren. Damit entfällt die Notwendigkeit, die Kalibriervorrichtung als Wegwerfartikel zu erzeugen und damit aufgrund geringerer Qualität ggf. Kontaktprobleme zu riskieren.

Erfindungsgemäß bevorzugt ist es vorgesehen, den Kalibrierdraht zwischen den Kontaktstiften einzuspannen. Hierdurch wird eine sichere Kontaktgabe gewährleistet und insbesondere vermieden, daß sich der Kalibrierdraht durch die Wärmeausdehnung in einer solchen Weise bewegt, daß der sichere Kontakt nicht mehr gewährleistet wäre. Bevorzugt läßt sich das Einspannen über eine V-förmige Aufnahmevorrichtung (54) endseitig der Stifte realisieren, in die der Kalibrierdraht eingeklemmt wird.

Besonders günstig ist es, daß die Kontaktzuführung über den Boden des Ofens, also durch das Steinfutter hindurch, geschützt erfolgt. Damit wird sicher vermieden, daß das durch die schwere Ofenhaube eingeklemmte Kabel beschädigt wird.

In vorteilhafter Ausgestaltung der Erfindung ist es vorgesehen, daß das Steinfutter über recht dünne Drähte durchkontaktiert ist. Derartige Drähte sind als Wärmebrücken vernachlässigbar, zumal im Betrieb die Mulde, in der sie enden, von einer Füllscheibe abgedeckt ist. Gemäß einer modifizierten Ausgestaltung ist es demgegenüber vorgesehen, das Steinfutter mit einer recht dünnen Bohrung zu versehen, die beim Einsetzen der Kalibriervorrichtung von den Kontaktstiften der Kalibriervorrichtung durchtreten wird und unten in Kontaktfedern eingesteckt wird. Auch bei dieser Lösung ist die Aufrechterhaltung eines Unterdrucks während des Kalibriervorgangs möglich.

Gemäß einer weiter modifizierten Lösung ist der Kalibrierdraht durch ein Thermoelement ersetzt, das eine Widerstandsänderung beim Erreichen einer bestimmten Temperatur aufweist, die für die Kalibrierung ausgenutzt wird.

In vorteilhafter Ausgestaltung der Erfindung erfolgt die Justierung des Muffelofens selbsttätig. Die drastische Widerstandsänderung, beispielsweise aufgrund des Schmelzens des Kalibrierdrahts, wird erfaßt und als Referenztemperatur für den Abgleich des Ofens verwendet.

Weitere Einzelheiten, Vorteile und Merkmale ergeben sich aus der nachfolgenden Beschreibung mehrerer Ausführungsbeispiele anhand der Zeichnung. Es zeigen:
- Fig. 1: eine schematische Ansicht eines erfindungsgemäßen Ofens im Schnitt;
- Fig. 2: eine vergrößerte Darstellung der Kalibriervorrichtung für die Ausführungsform des erfindungsgemäßen Ofens gemäß Fig. 1;
- Fig. 3: eine Darstellung der Aufnahmevorrichtung der Kalibriervorrichtung in einer ersten Ausführungsform;
- Fig. 4: eine Darstellung einer weiteren Ausführungsform eines Stiftes einer modifizierten Ausgestaltung der Kalibriervorrichtung; und
- Fig. 5: eine Ansicht einer modifizierten Ausgestaltung eines Stifts einer Kalibriervorrichtung für einen erfindungsgemäßen Ofen.

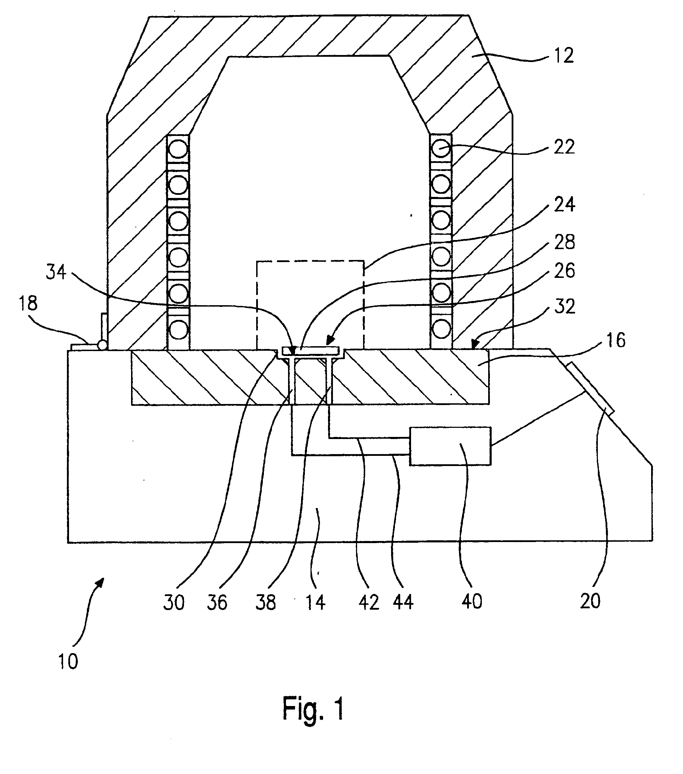

Der in Fig. 1 dargestellte Ofen 10 weist eine Brennhaube 12 und einen Ofensockel 14 auf, in den eine Brenngutplatte 16 integriert ist. Die Brennhaube 12 ist am Ofensockel 14 über ein Gelenk 18 nach oben schwenkbar gelagert. Das Gelenk 18 ist hinten, an einer einem Bedienfeld 20 gegenüberliegenden Seite des Ofensockels 14 ausgebildet.

In die Brennhaube 12 sind Heizelemente 22 integriert, die dafür bestimmt sind, eine gestrichelt angedeutete Muffel 24 bei Bedarf zu erwärmen. Die Muffel 24 steht auf der Brenngutplatte 16 und ist nach Anheben der Brennhaube 12 leicht entfernbar. Es versteht sich, daß die Muffel 24, die lediglich beispielhaft dargestellt ist, nur bei Pressöfen eingesetzt wird, während andere Brennöfen andere Brenngutträger verwenden.

Die Brenngutplatte 16 weist eine Mulde 26 auf, in die im Normalbetrieb eine recht genau passende Füllscheibe 28 eingelegt ist. In die Füllscheibe 28 kann beispielsweise ein kleiner Magnet oder ein ferromagnetisches Material integriert sein, das es ermöglicht, die Füllscheibe 28 bei Bedarf trotz ihrer glatten Oberfläche anzuheben.

Die in Fig. 1 dargestellte Ausführungsform eines Ofens hat eine Mulde und eine entsprechend geformte Füllscheibe 28, die ausgesprochen flach ist. Es versteht sich, daß die Form in weiten Bereichen an die Erfordernisse anpaßbar ist. Beispielsweise können die Seitenwände 30 der Mulde 26 divergierend dergestalt ausgebildet sein, daß die Füllscheibe 28, deren Form entsprechend angepaßt ist, durch asymmetrischen Druck aus der Mulde 26 herausgleitet. Auch kann die Füllscheibe 28 so leicht realisiert sein, daß sie beispielsweise an einem befeuchteten Finger klebt und sich so entnehmen läßt. Wesentlich ist es jedenfalls, daß die temperaturfeste Füllscheibe 28 mindestens an ihrer Oberseite die Mulde 26 vollständig aushöhlt und abdeckt, so daß die Brenngutplatte 16 eine geschlossene Oberfläche 32 zeigt.

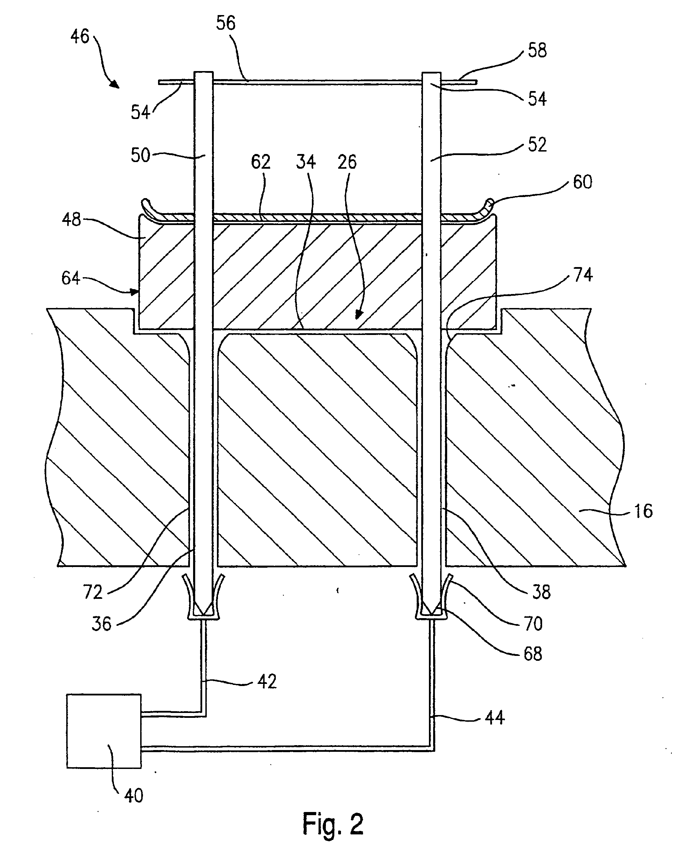

In die Unterseite 34 der Mulde 26 sind zwei Durchtrittsbohrungen 36 und 38 vorgesehen, die sich durch die Brenngutplatte 16 hindurch erstrecken. Die Durchtrittsbohrungen 36 und 38 dienen zur Herstellung der elektrischen Verbindungen zu der einzusetzenden Kalibriervorrichtung, wozu auf die Beschreibung zu Fig. 2 zu verweisen ist.

Im Ofensockel 14 ist ferner eine schematisch angedeutete Steuereinrichtung vorgesehen, die in an sich bekannter Weise mit dem Bedienfeld 20 verbunden ist. Von der Steuereinrichtung 40 erstrecken sich zudem Leitungen 42, 44 zu den Durchtrittsausnehmungen 36 und 38.

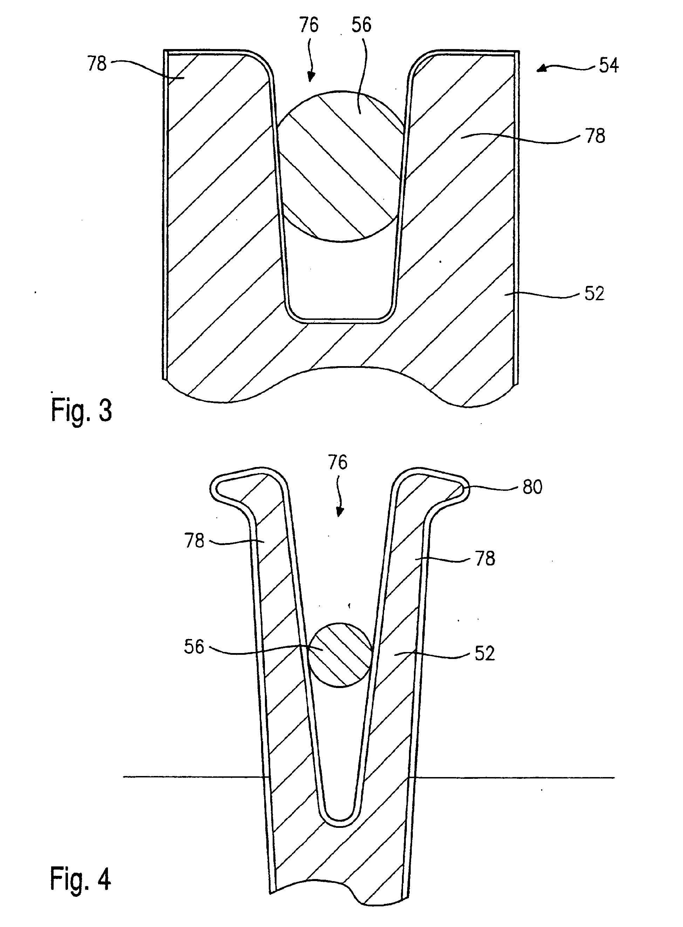

Aus Fig. 2 ist eine Ausführungsform einer erfindungsgemäßen Kalibriervorrichtung 46 ersichtlich. Die Kalibriervorrichtung 46 weist einen Kalibriersockel 48 auf. Der Kalibriersockel 48 wird von Stiften 50, 52 durchtreten. Jeder Stift 50 und 52 weist an seinem oberen Ende eine Aufnahmevorrichtung 54 für einen Schmelzdraht als Schmelzelement 56 auf. Der Schmelzdraht 56 erstreckt sich je mit überstehenden Enden 58 deutlich über die Aufnahmevorrichtungen 54 hinaus. Verschiedene Ausgestaltungen der Aufnahmevorrichtungen sind aus den Figuren 3, 4 und 5 ersichtlich.

Die Kalibriervorrichtung 46 weist in dem dargestellten Ausführungsbeispiel eine Abdeckscheibe 60 auf, die sich unter den Schmelzdraht 56 hindurch erstreckt und die gesamte Oberseite 62 des Kalibriersockels 48 abdeckt. Die Abdeckscheibe 60 ist als Einmalartikel ausgebildet und dient dazu, eine Verschmutzung des Kalibriersockels 48 durch Reste des geschmolzenen Schmelzelements 56 zu vermeiden. Beispielsweise kann sie aus einer Lage Mineralwolle oder Mineralwollenfilz bestehen, die auf die Stifte 50 und 52 aufgespießt wird, bevor das Schmelzelement 56 eingeklemmt wird.

Der Kalibriersockel 48 ist als Keramikkörper ausgebildet und weist Seitenflächen 64 auf, die als Greifhandhabe dienen. Die Oberseite 62 ist an ihren Enden leicht trogförmig ausgebildet, so daß ein Herabfallen von Schmelzdrahtresten noch weniger wahrscheinlich wird. Zudem läßt sich durch diese Maßnahme die Funktion der Seitenflächen 64 als Greifhandhabe verbessern.

Die Stifte 50 und 52 weisen an ihrem unteren Ende je einen Konus 68 auf, der als Einführhilfe bei der Einführung in Steckbuchsen 70 dient. Die Steckbuchsen 70 sind ofenfest gelagert. Sie weisen in an sich bekannter Weise elastische Kontaktfedern auf, die eine sichere Kontaktierung der elektrisch leitenden Stifte 50 und 52 ermöglichen. Ferner sind die Steckbuchsen 70 mit Drähten 42, 44 kontaktiert.

Die Kalibriervorrichtung 46 einschließlich der Drähte ist in einer temperaturfesten und oxidationsstabilen Weise ausgebildet. Sie ist auch recht klein, beispielsweise kann der Durchmesser des Kalibriersockels 48 etwa 10 mm betragen. Die Stifte 50 und 52 können beispielsweise als Stahlstifte ausgebildet sein und zweiteilig sein, wobei der obere Teil bei Bedarf, also bei Oxidation ausgetauscht werden kann. Bei Verwendung eines Ofens ohne Vakuum ist es günstig, wenn die Stifte aus Platin bestehen und die Steckbuchsen 70 aus Gold oder vergoldet, nachdem im Bereich der Brenngutplatte 16 die Temperatur deutlich geringer ist. Für die Drähte 42 und 44 reicht Silberdraht, wobei es sich versteht, daß die Materialwahl in weiten Bereichen an die Erfordernisse angepaßt werden kann.

Wenn die Kalibriervorrichtung - was erfindungsgemäß auch möglich ist - ausschließlich im Unterdruck-Zustand betrieben wird, ist es auch möglich, einen geeigneten Stahl für die Stifte 50 und 52 zu verwenden, nachdem unter Sauerstoffabschluß bzw. bei einer ganz geringen Sauerstoffkonzentration keine Oxidation zu befürchten ist. Es versteht sich, daß das Kalibrierprogramm, das von der Steuereinrichtung 40 gesteuert wird, diese entsprechenden Parameter fest vorgibt, um insofern eine Fehlbedienung auszuschließen.

Für die Kalibrierung des Ofens wird zunächst der Kalibriersockel 48 mit den Stiften 50 und 52 eingesetzt, nachdem die Füllscheibe 28 entfernt worden ist. Hierzu greift der Bediener die Kalibriervorrichtung 46 regelmäßig an den Seitenflächen 64, nicht hingegen an den Stiften 50 und führt die Stifte mit ihrem Konus 68 in die Steckbuchsen 70 ein. Hierbei leisten Einführschrägen 74, die an den oberen Enden der Vertiefungen 72 ausgebildet sind, Hilfe.

Anschließend hieran wird die Abdeckscheibe 60 auf die Stifte 50 und 52 aufgespießt. Dann wird der Kalibrierdraht in Form des Schmelzelements 56 in der entsprechenden Länge symmetrisch eingesetzt. Hierzu greift der Bediener die beiden überstehenden Enden 58 und zieht den Kalibrierdraht in die Aufnahmevorrichtungen 54 leicht fest.

Hieran anschließend wird die Brennhaube 12 abgesenkt und über das Bedienfeld 20 das Kalibrierprogramm gestartet. Sobald das Schmelzelement 56 schmilzt, erfaßt die Steuereinheit 40 die drastische Widerstandszunahme zwischen den Leitungen 42 und 44 und verwendet die hierbei vorherrschende Temperatur als Referenztemperatur für den internen Abgleich.

Erfindungsgemäß ist es möglich, beispielsweise zwei Referenzpunkte zu verwenden, indem einmal ein Kalibrierprogramm Gold mit einem Golddraht und einmal ein Kalibrierprogramm Silber mit einem Kalibrierdraht aus Silber durchgeführt wird. Hierdurch lassen sich zwei Referenztemperaturen, nämlich 1.064,76 °C für Gold und 961,3 °C für Silber als verläßliche Kalibriertemperaturen verwenden, so daß auch ein Kurvenabgleich der Temperaturkurve des Ofens möglich ist.

Aus Fig. 3 ist eine mögliche Ausgestaltung der Aufnahmevorrichtung 54 ersichtlich. In diesem Ausführungsbeispiel besteht die Aufnahmevorrichtung 54 aus einem im wesentlichen U-förmigen Schlitz 76, wobei die massiven Seitenschenkel 78 nach oben/außen leicht divergieren. Der Divergenzwinkel beträgt in dem dargestellten Ausführungsbeispiel 10 °. Durch das Einziehen des Schmelzdrahts 56 in einen solchen Schlitz werden seine Seitenflächen elastisch leicht verformt, wobei der Divergenzwinkel so gering ist, daß die Reibung ausreicht, um zu verhindern, daß der Schmelzdraht 56 nach oben gedrückt wird. Hierdurch ist eine sichere Kontaktgabe mit einfachen Mitteln möglich.

Eine modifizierte Ausgestaltung eines Stifts 52 ist aus Fig. 4 ersichtlich. Bei dieser Lösung besteht der Stift 52 im wesentlichen aus Quartz, das mit Platin bedampft ist. Der Schlitz 76 ist hier wesentlich tiefer, so daß eine Formelastizität bereitgestellt wird und durch den eingedrückten Schmelzdraht 56 die Seitenschenkel 78 auseinanderbewegt werden. Auch hier ist eine sichere Kontaktgabe zwischen der Platinschicht 80 und dem Schmelzdraht 56 gegeben.

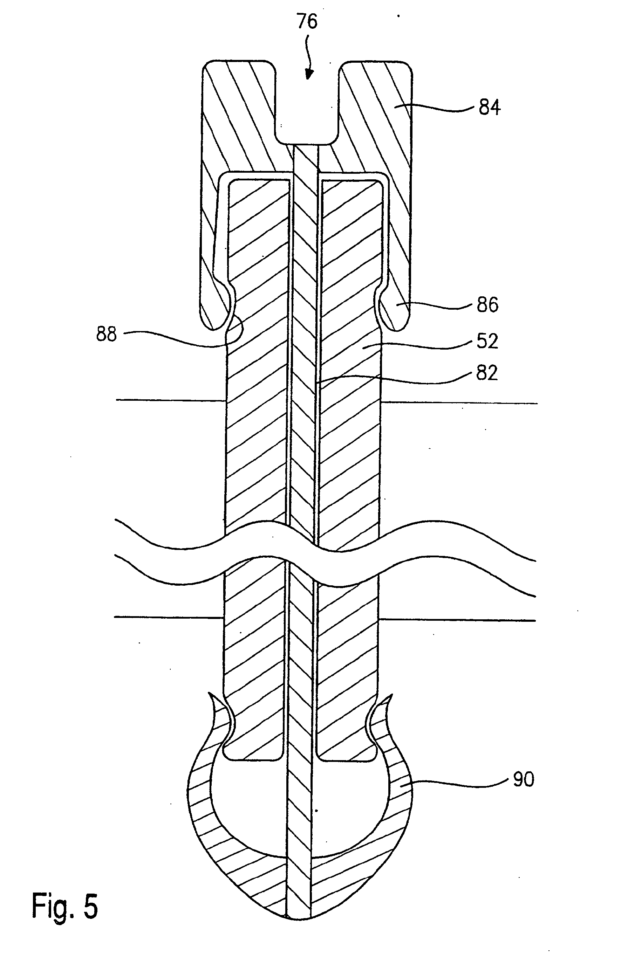

Eine weitere modifizierte Ausgestaltung ist aus Fig. 5 ersichtlich. Bei dieser Lösung ist der Stift als Quartzglasstift 52 ausgebildet. Er weist eine Durchtrittsbohrung 82 auf, durch die ein dünner Draht hindurch verläuft. Eine Kontaktkappe 84 weist den Schlitz 76 für die Aufnahme des nicht dargestellten Schmelzdrahts auf. Die Kontaktkappe 84 weist Greifschenkel 86 auf, die in seitliche Vertiefungen 88 in dem Stift 52 eingreifen. Die Kontaktkappe 84 ist innen/unten durch den Platindraht verbunden.

Eine weitere Kontaktkappe 90 ist ebenfalls mit dem Platindraht verbunden und umgreift ebenfalls den Stift 52 an seinem unteren Ende. Diese Kontaktkappe 90 ist für das Einführen in die Steckbuchse 70 geeignet ausgebildet. Diese Lösung ermöglicht eine Realisierung eines Stifts 52 unter Verwendung von weniger Platinmaterial, wobei es sich versteht, daß diese Lösung vor allem dann geeignet ist, wenn die gesamte Kalibriervorrichtung wesentlich größer ausgebildet ist, weshalb es oben beschrieben wurde.

Ferner sind weitere Ausführungsformen im Rahmen der Erfindung möglich. So kann jeder Stift 50 und 52 durch die Durchtrittsbohrungen 36 und 38 hindurchgezogen sein, so daß die Steckbuchsen 70 unterhalb der Brenngutplatte 16 vorgesehen sind. Bei dieser Lösung kann der Stift 50 und 52 auch je zweigeteilt sein, wobei der obere Teil als Probenhalter mit einem unteren Teil als Kontaktstift verschraubbar sein kann. Besonders bei dieser Lösung muß darauf geachtet werden, daß nicht durch seitlichen Druck auf den Kontaktstift oder den Probenhalter der Kalibriersockel 48 bricht.

Ferner kann der Kalibriersockel 48 eine beliebige Form aufweisen. Beispielsweise kann er oval, kreisrund oder rechteckig sein. Es ist jedenfalls günstig, seine Größe so zu wählen, daß sichergestellt ist, daß keine geschmolzenen Reste des Schmelzelements 56 die Brenngutplatte 16 verunreinigen können.

## Patentansprüche

1. Ofen, insbesondere für Dentalmaterial, mit einer Brenngutplatte, mit einer Kalibriervorrichtung (46), die in den Ofen (10) einsetzbar und aus diesem entfernbar ist, wobei der Ofen (10) ein Kalibrierprogramm aufweist und wobei die Kalibriervorrichtung (46) insbesondere ein Schmelzelement (56) aufweist, dessen Schmelzen von einer Erfassungsvorrichtung erfaßt wird, **dadurch gekennzeichnet, daß** die Brenngutplatte (16) eine Vorrichtung für die Aufnahme der Kalibriervorrichtung (46) aufweist und die Kalibriervorrichtung (46) zwei elektrisch leitende Stifte (50, 52) aufweist zwischen denen das Schmekelement (56) einspannbar ist, die einen elektrisch isolierenden Kalibriersockel (48) durchtreten.

2. Ofen nach Anspruch 1, **dadurch gekennzeichnet, daß** die Vorrichtung als Mulde (26) ausgebildet ist.

3. Ofen nach Anspruch 1 oder 2, **dadurch gekennzeichnet, daß** Steckbuchsen (70) vorgesehen sind, in welche die unteren Enden der Stifte (50, 52) einsteckbar, insbesondere einschnappbar sind.

4. Ofen nach einem der vorhergehenden Ansprüche, **dadurch gekennzeichnet, daß** in die Mulde (26) der Kalibriersockel (48) einsetzbar ist und die Mulde (26) beim Gebrauch des Ofens (10) einer Füllscheibe (28) abdeckbar ist.

5. Ofen nach einem der vorhergehenden Ansprüche, **dadurch gekennzeichnet, daß** jeder Stift (50, 52), insbesondere an seinem oberen Ende, eine Aufnahmevorrichtung (54), insbesondere einen Schlitz (76), für die Aufnahme des Schmelzelements (56) aufweist, die eine sichere elektrische Verbindung bietet.

6. Ofen nach Anspruch 5, **dadurch gekennzeichnet, daß** das Schmelzelement (56) als Draht ausgebildet ist und in die Aufnahmevorrichtung (54) des Stiftes (50, 52) einklemmbar ist.

7. Ofen nach Anspruch 5 oder 6, **dadurch gekennzeichnet, daß** die Aufnahmevorrichtung (54) V- oder im wesentlichen U-förmig mit einem Öffnungswinkel zwischen den Seitenschenkeln (78) zwischen 3° und 20°, insbesondere zwischen 5 und 10° ausgebildet ist.

8. Ofen nach einem der vorhergehenden Ansprüche, **dadurch gekennzeichnet, daß** die Stifte (50, 52) Kontaktstifte aufweisen, die die Brenngutplatte (16) durchtreten, wobei unterhalb der Brenngutplatte (16) federnde Steckbuchsen (70) für die Stifte (50, 52) angeordnet sind.

9. Ofen nach Anspruch 8, **dadurch gekennzeichnet, daß** die Brenngutplatte (16) Durchtrittsausnehmungen (36, 38) aufweist, die von den Kontaktstiften durchtretbar sind und deren Durchmesser nur um weniges größer als der Durchmesser der Kontaktstifte ist und die insbesondere Einführschrägen (74) aufweisen.

10. Ofen nach einem der vorhergehenden Ansprüche, **dadurch gekennzeichnet, daß** der Kalibriersockel (48) aus einem temperaturbeständigen Material besteht, dessen Wärmeausdehnungskoeffizient im wesentlichen etwa dem Wärmeausdehnungskoeffizient des Materials der Stifte (50, 52) entspricht oder etwas größer als dieser ist.

11. Ofen nach Anspruch 10, **dadurch gekennzeichnet, daß** der Kalibriersockel (48) aus keramischen Material besteht und Seitenflächen (64) aufweist, die sich als Greifhandhabe seitlich aus der Mulde (26) heraus nach oben erstrecken.

12. Ofen nach einem der vorhergehenden Ansprüche, **dadurch gekennzeichnet, daß** das Schmelzelement (56) als Draht ausgebildet ist, der eine Stärke aufweist, die etwas geringer als die lichte Weite zwischen den Seitenschenkeln (78) der Aufnahmevorrichtung (54) an deren oberem Ende ist und in die Aufnahmevorrichtung (54) einklemmbar ist.

13. Ofen nach einem der vorhergehenden Ansprüche, **dadurch gekennzeichnet, daß** das Schmelzelement (56) überstehende Enden (58) aufweist, die die Stifte (50, 52) seitlich überragen und als Greifhandhabe für das Einklemmen des Schmelzelements (56) in den Aufnahmevorrichtungen (54) geeignet sind.

14. Ofen nach einem der vorhergehenden Ansprüche, **dadurch gekennzeichnet, daß** das Material für das Schmelzelement (56) in an sich bekannter Weise so ausgewählt ist, daß es einen engen Schmelzbereich aufweist und unterschiedliche Materialien für unterschiedliche Kalibriertemperaturen einsetzbar sind.

15. Ofen nach einem der vorhergehenden Ansprüche, **dadurch gekennzeichnet, daß** eine Abdeckscheibe (60) für den Kalibriersockel (48) vorgesehen ist, die als Einmalartikel auf die Stifte (50, 52) aufspießbar ist und mit deren Entnahme etwaige geschmolzene Reste des Schmelzelements (56) entfernbar sind.

16. Ofen nach Anspruch 15, **dadurch gekennzeichnet, daß** die Abdeckscheibe (60) aus einem temperaturbeständigem Material besteht, beispielsweise als Quarzglasfilz- oder Mineralwollenfil-Scheibe ausgebildet ist, die ohne weiteres von dem Kalibriersockel (48) ablösbar ist.

17. Ofen nach einem der vorhergehenden Ansprüche, **dadurch gekennzeichnet, daß** die Stifte (50, 52) aus einem auch bei hohen Temperaturen nicht oxidierenden oder nicht wesentlich oxidierenden Material besteht oder mit einem solchen beschichtet ist, insbesondere aus Edelstahl besteht und/oder mit Edelmetall beschichtet ist.

18. Ofen nach einem der vorhergehenden Ansprüche, **dadurch gekennzeichnet, daß** die Mulde (26) im Betrieb des Ofens (10) von einer Füllscheibe (28) abdeckbar ist, die die Mulde (26) im wesentlich vollständig ausfüllt.

19. Ofen nach einem der vorhergehenden Ansprüche, **dadurch gekennzeichnet, daß** die Kalibriervorrichtung (46) an eine Programmsteuerung (40) des Ofens (10) angeschlossen ist und beim Aufruf eines Kalibrierprogramms der Schmelz-Temperaturpunkt des Schmelzelements (56) automatisch erfaßbar und für Kalibrierzwecke in die Ofensteuerung übernehmbar ist.

20. Kalibriervorrichtung für einen Ofen (10), mit einem Schmelzelement (56), dessen Schmelzen für das Erfassen einer Kalibriertemperatur bestimm or, ist, **dadurch gekennzeichnet, daß** die Kalibriervorrichtung (46) zwei elektrisch leitende Stifte (50, 52) aufweist, zwischen denen das Schmelzelement (56) einspannbar ist und die einen elektrisch isolierenden Kalibriersockel (48) durchtreten.

## Claims

1. A kiln, in particular for dental material, with a plate for material to be fired, with a calibration device (46) which can be inserted into and removed from the kiln, wherein the kiln (10) has a calibration program and wherein the calibration device (46) has in particular a melting element (56), the melting of which is detected by a sensing device, **characterised in that** the plate (16) for material to be fired has a device for accommodating the calibration device (46) and the calibration device (46) has two electrically conductive rods (50,52), between which the melting element (56) can be clamped and which pass through an electrically insulating calibration pedestal (48).

2. A kiln according to Claim 1, **characterised in that** the device is in the form of a trough (26).

3. A kiln according to Claim 1 or 2, **characterised in that** insert sockets (70) are provided, in which the lower ends of the rods (50,52) can be inserted, in particular can be snapfitted therein.

4. A kiln according to any one of the preceding Claims, **characterised in that** the calibration pedestal (48) can be inserted into the trough (26) and the trough (26) can be covered by a filling plate (28) when the kiln (10) in is use.

5. A kiln according to any one of the preceding Claims, **characterised in that**, particularly at its upper end, each rod (50,52) has a receiving means (54), in particular a slot (76) to receive the melting element (56), which provides a reliable electrical connection.

6. A kiln according to Claim 5, **characterised in that** the melting element (56) is in the form of wire and can be clamped in the receiving means (54) of the rod (50,52).

7. A kiln according to any one of the preceding Claims, **characterised in that** the receiving means (54) is V-shaped or substantially U-shaped with an aperture angle between the lateral arms (78) of between 3° and 20°, in particular of between 5 and 10°.

8. A kiln according to any one of Claims 1 to 6, **characterised in that** the rods (50,52) have contact pins which pass through the firing material plate (16), wherein resilient insert sockets (70) for the rods (50,52) are disposed under the firing material plate (16).

9. A kiln according to Claim 8, **characterised in that** the firing material plate (16) has passage openings (36,38), through which the contact pins can pass and the diameter of which is only slightly larger than the diameter of the contact pins and, in particular, have insert bevels (74).

10. A kiln according to any one of the preceding Claims, **characterised in that** the calibration pedestal (48) consists of a temperature-resistant material whose coefficient of thermal expansion corresponds substantially approximately to the coefficient of thermal expansion of the material of the rods (50,52) or is slightly higher than the latter.

11. A kiln according to Claim 10, **characterised in that** the calibration pedestal (48) consists of ceramic material and has lateral surfaces (64) which extend upwards laterally from the trough (26) as gripping handles.

12. A kiln according to any one of the preceding Claims, **characterised in that** the melting element (56) is in the form of wire which is of a thickness which is slightly smaller than the clear width between the lateral arms (78) of the receiving means (54) at the upper end thereof and can be clamped in the receiving means (54).

13. A kiln according to any one of the preceding Claims, **characterised in that** the melting element (56) has projecting ends (58) which protrude laterally beyond the rods (50,52) and are suitable as a gripping handle for the clamping of the melting element (56) in the receiving means (54).

14. A kiln according to any one of the preceding Claims, **characterised in that** the material for the melting element (56) is chosen in a manner known per se so that it has a narrow melting range and different materials can be used for different calibration temperatures.

15. A kiln according to any one of the preceding Claims, **characterised in that** a cover plate (60) is provided for the calibration pedestal (48) and can be speared on to the rods (50,52) as a disposable article and upon its removal any molten residues of the melting element (56) can be removed.

16. A kiln according to Claim 15, **characterised in that** the cover plate consists of temperature-resistant material, for example is in the form of a quartz glass felt or mineral wool felt [sic] plate, which can be readily loosened from the calibration pedestal (48).

17. A kiln according to any one of the preceding Claims, **characterised in that** the rods (50,52) consist of a material which does not oxidise or does not substantially oxidise eve at high temperatures or are coated with such a material, in particular consist of stainless steel and/or are coated with precious metal.

18. A kiln according to any one of the preceding Claims, **characterised in that** during the operation of the kiln (10) the trough (26) can be covered by a filling plate (28) which substantially completely fills the trough (26).

19. A kiln according to any one of the preceding Claims, **characterised in that** the calibration device (46) is connected to a program control (40) of the kiln (10) and whe: a calibration program is accessed the melting temperature point of the melting element (56) can be automatically determined and can be entered into the kiln control for calibration purposes.

20. A calibration device for a kiln (10), with a melting element (56), the melting of which can be determined for detecting the calibration temperature, **characterised in that** the calibration device (46) has two electrically conductive rods (50,52), between which the melting element (56) can be clamped and which pass through an electrically insulating calibration pedestal (48).

## Revendications

1. Four, en particulier pour un matériau dentaire, comportant une plaque de cuisson, un dispositif de calibration (46), qui peut être introduit dans le four (10) et retiré de celui-ci, le four (10) disposant d'un programme de calibration et le dispositif de calibration (46) comportant en particulier un élément fusible (56), dont la fusion est enregistrée par un dispositif d'enregistrement, **caractérisé en ce que** la plaque de cuisson (16) comporte un dispositif destiné à recevoir le dispositif de calibration (46) et **en ce que** le dispositif de calibration (46) est muni de deux broches électroconductrices (50, 52), entre lesquelles l'élément fusible (56) peut être tendu et qui traversent un socle de calibration (48) électro-isolant.

2. Four selon la revendication 1, **caractérisé en ce que** le dispositif est réalisé en forme de cavité (26).

3. Four selon la revendication 1 ou 2, **caractérisé en ce qu'**il est prévu des fiches femelles (70), dans lesquelles les extrémités inférieures des broches (50, 52) peuvent être enfichées, en particulier être encliquetées.

4. Four selon l'une quelconque des revendications précédentes, **caractérisé en ce que** le socle de calibration (48) peut être inséré dans la cavité (26) et, lors de l'utilisation du four (10), la cavité (26) peut être obturée par une plaque de remplissage (28).

5. Four selon l'une quelconque des revendications précédentes, **caractérisé en ce que** chaque broche (50, 52) est munie, en particulier à son extrémité supérieure, d'un dispositif de réception (54), en particulier une fente (76), destinée à recevoir l'élément fusible (56), qui assure une liaison électrique sûre.

6. Four selon la revendication 5, **caractérisé en ce que** l'élément fusible (56) est constitué par un fil et qu'il peut être serré dans le dispositif de réception (54) de la broche (50, 52).

7. Four selon la revendication 5 ou 6, **caractérisé en ce que** le dispositif de réception (54) est réalisé en forme de V ou sensiblement en forme de U, dont l'angle d'ouverture entre les branches latérales (78) se situe entre 3° et 20°, en particulier entre 5° et 10°.

8. Four selon l'une quelconque des revendications précédentes, **caractérisé en ce que** les broches (50, 52) comportent des pointes de contact, qui traversent la plaque de cuisson (16), des fiches femelles flexibles (70) pour les broches (50, 52) étant agencées en dessous de la plaque de cuisson (16).

9. Four selon la revendication 8, **caractérisé en ce que** la plaque de cuisson (16) comporte des évidements débouchants (36, 38), qui peuvent être traversés de part en part par les pointes de contact et dont le diamètre n'est que légèrement supérieur à celui des pointes de contact et lesquels sont en particulier munis de chanfreins d'entrée (74).

10. Four selon l'une quelconque des revendications précédentes, **caractérisé en ce que** le socle de calibration (48) est réalisé dans un matériau stable à la température, dont le coefficient de dilatation thermique correspond sensiblement au coefficient de dilatation thermique du matériau des broches (50, 52) ou est quelque peu supérieur à celui-ci.

11. Four selon la revendication 10, **caractérisé en ce que** le socle de calibration (48) est réalisé dans un matériau céramique et comporte des faces latérales (64) qui s'avancent latéralement hors de la cavité (26) vers le haut pour constituer une prise de manipulation.

12. Four selon l'une quelconque des revendications précédentes, **caractérisé en ce que** l'élément fusible (56) est un fil, qui a une dimension légèrement inférieure à la largeur de l'ouverture entre l'extrémité supérieure des branches latérales (78) du dispositif de réception (54) et qui peut être serré dans le dispositif de réception (54).

13. Four selon l'une quelconque des revendications précédentes, **caractérisé en ce que** l'élément fusible (56) comporte des extrémités saillantes (58) qui s'avancent latéralement au-delà des broches (50, 52) et sont appropriées à former une prise de manipulation pour serrer l'élément fusible (56) dans le dispositif de réception (54).

14. Four selon l'une quelconque des revendications précédentes, **caractérisé en ce que** le matériau pour l'élément fusible (56) est, de manière connue en soi, choisi de telle sorte qu'il a une étroite plage de fusion et que différents matériaux sont utilisables pour différentes températures de calibration.

15. Four selon l'une quelconque des revendications précédentes, **caractérisé en ce qu'**une plaque de recouvrement (60) est prévue pour le socle de calibration (48), laquelle sous forme d'élément à usage unique, peut être embrochée sur les broches (50, 52) et, lors de son retrait, permet d'éliminer d'éventuels restes fondus de l'élément fusible (56).

16. Four selon la revendication 15, **caractérisé en ce que** la plaque de recouvrement (60) est réalisée dans un matériau stable à la température et est conçue, par exemple, sous forme de plaque en feutre de quartz ou en feutre de laine minérale, qui peut être détachée aisément du socle de calibration (48).

17. Four selon l'une quelconque des revendications précédentes, **caractérisé en ce que** les broches (50, 52) sont constituées dans un matériau non oxydant même à hautes températures ou un matériau sensiblement non oxydant ou sont revêtues d'un tel matériau, en particulier sont réalisées en acier spécial et/ou sont revêtues d'acier spécial.

18. Four selon l'une quelconque des revendications précédentes, **caractérisé en ce que** la cavité (26), en cours d'utilisation du four (10), peut être obturée par une plaque de remplissage (28) qui remplit sensiblement la totalité de la cavité (26).

19. Four selon l'une quelconque des revendications précédentes, **caractérisé en ce que** le dispositif de calibration (46) est relié à une commande de programmation (40) du four (10) et, en cas de lancement d'un programme de calibration, la température du point de fusion de l'élément fusible (56) peut être enregistrée automatiquement et peut être transférée dans la commande du four à des fins de calibration.

20. Dispositif de calibration pour un four (10), comportant un élément fusible (56) dont la fusion peut être déterminée pour l'enregistrement d'une température de calibration, **caractérisé en ce que** le dispositif de calibration (46) comporte deux broches (50, 52) électroconductrices, entre lesquelles peut être tendu un élément fusible (56) et qui traversent un socle de calibration (48) électro-isolant.
